# FASCICULE DE BREVET EUROPEEN

(11) **EP 0 821 240 B1**
(45) Date de publication et mention de la délivrance du brevet: **09.01.2002**
(21) Numéro de dépôt: 97401718.8
(22) Date de dépôt: 16.07.1997
(51) Int. Cl.: G01P 3/44

(54) **Roulement à capteur d'informations**
Wälzlager mit Messwertaufnehmer
Roller bearing with measuring sensor

(30) Priorité: 24.07.1996 FR 9609296
(43) Date de publication de la demande: 28.01.1998
(73) Titulaire: SKF FRANCE, F-92142 Clamart Cédex (FR)
(72) Inventeur: Message, Olivier, 37000 Tours (FR); Landrieve, Franck, 37230 Fondettes (FR)
(74) Mandataire: Casalonga, Axel

(56) Documents cités:
- EP-A- 0 453 331
- EP-A- 0 671 628
- DE-A- 3 041 334
- GB-A- 1 509 170
- GB-A- 2 207 470

## Description

La présente invention concerne le domaine des paliers à roulement munis de capteurs d'informations.

De tels types de paliers à roulement comportent en général une bague fixe et une bague tournante, une ou plusieurs rangées d'éléments roulants en contact avec des chemins de roulement aménagés sur lesdites bagues, des moyens d'étanchéité, un capteur solidaire de la bague fixe et un codeur solidaire de la bague tournante. Le capteur proprement dit est supporté par un bloc porte-capteur.

On connaît par le document FR-A 2 668 561 un roulement de ce type avec un joint d'étanchéité qui supporte le capteur et qui est fixé sur la bague fixe du roulement par encliquetage d'une portion périphérique annulaire dudit joint dans une rainure aménagée dans l'alésage de la bague fixe. Cette rainure est en général obtenue par tournage et les tolérances de fabrication de telles rainures sont par conséquent relativement larges. Or, la fiabilité du signal émis par le capteur dépend en grande partie de la précision dimensionnelle de l'entrefer entre le capteur et le codeur. Dans un tel type de montage où la rainure constitue la surface de référence devant assurer à la fois la retenue et le positionnement axial et radial du joint supportant le capteur, la valeur de l'entrefer entre le capteur et le codeur risque de ne pas être dans les limites acceptables avec des conséquences néfastes sur la précision et la fiabilité du signal émis par le capteur. Par ailleurs, la lèvre du joint d'étanchéité vient en contact de frottement sur le flanc d'un anneau élastique solidaire de la bague tournante. Un tel contact ne présente pas toutes les garanties d'une étanchéité satisfaisante.

On connaît, également, par le document FR-A 2 618 516 un roulement à capteur d'informations dans lequel le capteur est supporté par un écran en tôle qui assure à la fois sa retenue et son positionnement. L'écran porte capteur peut être emmanché sur une portée cylindrique de l'une des bagues ou fixé par déformation d'une bordure d'extrémité dans une rainure prévue dans l'une des bagues. On comprend que la valeur de l'entrefer radial entre le capteur et le codeur risque de subir une dispersion importante due aux tolérances de fabrication relativement larges d'un écran en tôle et aux déformations dudit écran lors de son emmanchement ou son sertissage sur la bague qui le supporte. Le signal émis par le capteur ne sera donc pas d'une fiabilité satisfaisante.

Le document GB-A-1 509 170 (POLYMOTOR) concerne un roulement à billes avec détecteur de la vitesse de rotation. Le détecteur comprend un noyau magnétique et une bobine et est supporté par l'une des bagues, le noyau faisant saillie entre les bagues et étant disposé de façon à détecter la rotation de la cage avec un entrefer axial. Le détecteur est retenu axialement et radialement par une pièce en tôle entourant la bague extérieure. Ce type de fixation du bloc capteur ne peut convenir à un système de détection à entrefer radial du fait du peu de précision fourni par le capot en tôle pour les raisons déjà évoquées plus haut.

De plus, le capot enveloppe complètement le diamètre extérieur du roulement, ce qui nuit à un emmanchement correct du roulement dans son logement. Enfin, le jeu de la cage au cours de son mouvement de rotation et le faible nombre d'impulsions générées sur un tour complet d'une bague par rapport à l'autre, ne procurent pas un signal de bonne qualité.

La présente invention a pour objet de remédier à ces inconvénients en proposant un roulement à capteur d'information avec un entrefer déterminé et précis, le roulement restant néanmoins de fabrication économique.

La présente invention a également pour objet un roulement à capteur d'informations dans lequel le bloc porte-capteur est positionné contre une surface de la bague fixe.

Le palier à roulement, selon l'invention, comprend une bague fixe, une bague tournante, une rangée d'éléments roulants disposés entre la bague fixe et la bague tournante, un moyen codeur solidaire de la bague tournante et concentrique à celle-ci et un moyen capteur pourvu d'un bloc porte-capteur solidaire de la bague fixe et disposé en regard avec un faible entrefer par rapport au moyen codeur dont le défilement lors de la rotation est détecté par le moyen capteur. Le palier à roulement comprend un moyen de mise en appui du bloc porte-capteur contre une surface radiale de la bague fixe. Le moyen capteur est positionné radialement sur la bague fixe par centrage sur une surface de référence cylindrique axiale de ladite bague, l'entrefer étant radial. Le palier à roulement comprend un capot entourant le bloc porte-capteur et solidarisé avec la bague fixe en vue de la retenue axiale dudit bloc porte-capteur. On obtient ainsi un capteur parfaitement positionné par rapport à la bague fixe ce qui permet d'obtenir un entrefer précis.

La surface de référence cylindrique peut être un alésage ou une surface extérieure de la bague fixe. Cette surface de référence est de préférence rectifiée.

Dans un mode de réalisation de l'invention, le palier comprend un moyen de positionnement axial du bloc porte-capteur sous la forme d'une surface radiale de la bague fixe. On peut ainsi fabriquer le capot de retenue de façon économique avec des tolérances dimensionnelles larges n'ayant aucune influence négative sur la précision du positionnement du capteur par rapport à la bague fixe, le capot de retenue et le moyen de positionnement étant indépendants l'un de l'autre.

Avantageusement, le bloc porte-capteur est mis axialement en appui contre la bague fixe par le capot de retenue, ledit capot comprenant une portion cylindrique venant coopérer avec la bague fixe et une portion radiale de retenue et d'appui du bloc porte-capteur.

Dans un mode de réalisation de l'invention, le capot coopère avec une rainure annulaire de la bague fixe en vue de la retenue axiale dudit bloc. On peut réaliser la rainure annulaire de la bague fixe par tournage, sans rectification ultérieure. L'extrémité libre de la portion cylindrique du capot peut être sertie dans la rainure de la bague fixe ou bien pourvue de languettes élastiques formant des crochets et coopérant avec la rainure de la bague fixe.

Dans un mode de réalisation de l'invention, le palier comprend un moyen de positionnement du moyen codeur par rapport à la bague tournante. Le moyen codeur peut être positionné en contact avec une surface rectifiée de la bague tournante.

Dans un mode de réalisation de l'invention, le moyen codeur est positionné sur une surface cylindrique de la bague tournante.

Dans un mode de réalisation de l'invention, le bloc porte-capteur est axialement élastique.

Dans un mode de réalisation de l'invention, un joint d'étanchéité est surmoulé sur le capot et vient en contact de frottement sur une portée de la bague tournante.

Dans un autre mode de réalisation de l'invention, un joint d'étanchéité est pincé entre le capot et le bloc porte capteur et vient en contact de frottement sur une portée de la bague tournante. Dans ces deux derniers modes de réalisation, la lèvre du joint d'étanchéité en frottement sur une portée de la bague tournante assure une étanchéité satisfaisante.

De préférence, le palier comprend deux joints d'étanchéité identiques, disposés de chaque côté des éléments roulants.

Grâce à l'invention, il est possible de dissocier complètement la fonction de fixation du bloc porte-capteur de la fonction de positionnement du même bloc porte-capteur ce qui permet d'obtenir un entrefer précis entre le capteur et le codeur. On peut ainsi réaliser chacune de ces deux fonctions avec des moyens économiques dont la précision est adapté à leur influence respective sur la qualité du signal.

L'invention sera mieux comprise à l'étude de la description détaillée de quelques modes de réalisation pris à titre d'exemples nullement limitatifs et illustrés par les dessins annexés sur lesquels :
la figure 1 est une vue en coupe diamétrale d'un roulement selon un premier mode de réalisation de l'invention;
la figure 2 est une vue en demi-coupe diamétrale d'un roulement selon un deuxième mode de réalisation de l'invention;
la figure 3 est une vue en demi-coupe diamétrale d'un roulement selon un troisième mode de réalisation de l'invention;
la figure 4 est une vue partielle de côté en élévation du capot de protection de la figure 1;
la figure 5 est une vue partielle de dessus en élévation du capot de protection de la figure 1; et
la figure 6 est une vue en demi-coupe diamétrale d'un roulement selon un quatrième mode de réalisation de l'invention.

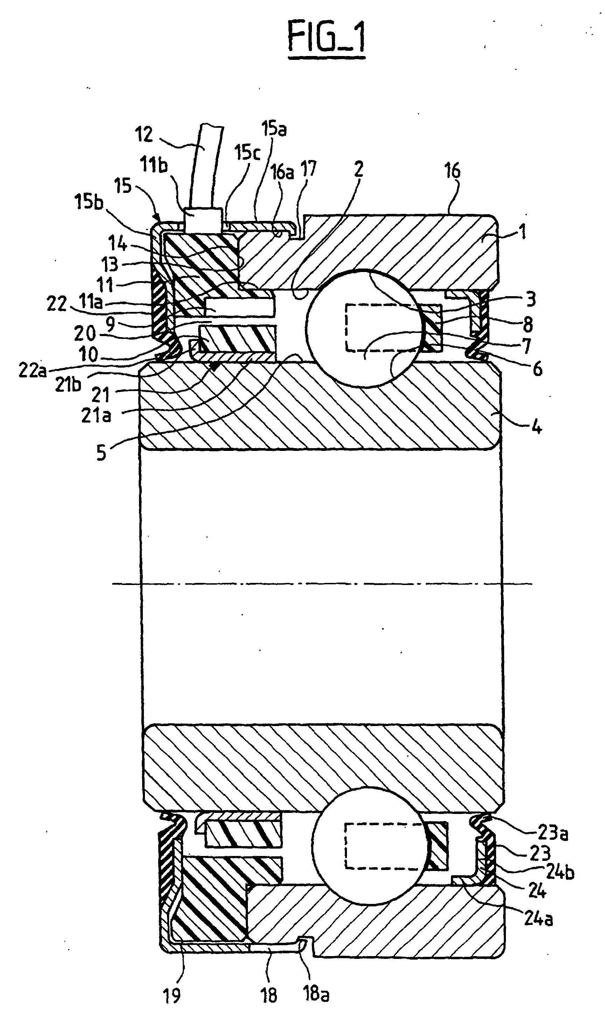

Comme on peut le voir sur la figure 1, le palier à roulement comprend une bague extérieure fixe 1 pourvue sur son alésage 2 d'un chemin de roulement 3 et une bague intérieure tournante 4 pourvue sur sa surface cylindrique extérieure 5 d'un chemin de roulement 6. Entre le chemin de roulement 3 et le chemin de roulement 6 est disposée une rangée d'éléments roulants 7, par exemple des billes, maintenues par une cage 8. Le palier à roulement comprend également, des moyens de détection de la vitesse, à savoir, un capteur 9 solidaire de la bague extérieure 1 et un codeur 10 solidaire de la bague intérieure 4. Le capteur 9 peut être un capteur magnétique, par exemple une sonde à effet Hall et est supporté par un bloc porte-capteur 11 en matériau synthétique. Le capteur 9 est relié à des moyens de traitement de l'information, non représentés, par un câble 12.

Le bloc porte-capteur 11 comprend une surface cylindrique extérieure 11a capable de venir se centrer sur une surface cylindrique de référence constituée par l'alésage 2 de la bague extérieure 1, et une surface radiale 13 adjacente à la surface cylindrique 11a capable de venir en contact avec la surface frontale d'extrémité 14 de la bague extérieure 1. Le bloc porte-capteur 11 est ainsi positionné de façon précise axialement et radialement par rapport à la bague extérieure 1 et est retenu en contact avec celle-ci par un capot 15 réalisé en tôle mince. Le bloc porte-capteur 11 peut être légèrement élastique axialement soit grâce à sa structure, soit grâce à son matériau, par exemple un élastomère.

Le capot 15 comprend une portion cylindrique 15a entourant le bloc porte-capteur 11 et une portion 16a de la surface cylindrique extérieure 16 de la bague fixe 1. La portion cylindrique 16a est de diamètre plus réduit que la surface cylindrique 16 de façon que le capot 15 ne dépasse pas de ladite surface cylindrique 16. La portion cylindrique 16a et la surface cylindrique 16 se raccordent par l'intermédiaire d'une rainure 17 annulaire dans laquelle viennent se loger les extrémités 18a qui forment crochets, de languettes 18 découpées dans la portion cylindrique 15a du capot 15. Un espace subsiste entre la portion cylindrique 15a et le bloc porte-capteur 11 afin de ne pas modifier le positionnement.

Le capot 15 comprend également une portion radiale 15b qui se raccorde à la portion cylindrique 15a à l'opposé des languettes 18 et empêche le bloc capteur 11 de se déplacer vers l'extérieur du palier à roulement. Le capot 15 est réalisé en tôle mince de façon à pouvoir utiliser l'élasticité axiale de la portion radiale 15b pour exercer une force axiale mettant le bloc porte-capteur 11 en appui contre la surface frontale 14 de la bague fixe 1. Pour parfaire cette mise en appui, on prévoit de laisser un faible espace 19 entre la portion cylindrique 15 et le bloc porte-capteur 11 et entre la portion radiale 15b et le bloc porte-capteur 11 à proximité de la portion cylindrique 15a. Seule l'extrémité de la portion radiale 15b à l'opposé de la portion cylindrique 15a est en contact avec le bloc porte-capteur 11 de façon à le pousser élastiquement contre la surface frontale 14.

Le codeur 10 qui peut être du type magnétique et être réalisé en plastoferrite est disposé en regard du capteur 9 de façon à définir un entrefer 20 radial avec le capteur 9. Le codeur 10 est supporté par un anneau 21 en tôle mince comprenant une portion cylindrique 21a et un bord de retenue radial 21b. La portion cylindrique 21a de l'anneau 21 de support du codeur 10 est emmanchée sur la surface cylindrique extérieure 5 de la bague intérieure 4. La bague intérieure 4 se prolonge axialement du côté du codeur 10 de façon à disposer de la place nécessaire à l'emmanchement de l'anneau 21.

Le palier à roulement est équipé de moyens d'étanchéité, un premier joint d'étanchéité 22 en matériau élastomère surmoulé sur la face extérieure de l'extrémité libre de la portion radiale 15b du capot 15 et comprend une lèvre 22a en contact de frottement avec la surface extérieure cylindrique 5 de la bague intérieure 4. Le palier à roulement comprend un second joint d'étanchéité 23 du côté opposé au premier joint d'étanchéité 22. Le joint d'étanchéité 23 est réalisé en matériau élastomère surmoulé sur un élément de support 24 en tôle et muni d'une lèvre d'étanchéité 23a en contact avec la surface extérieure cylindrique 5 de la bague intérieure 4. L'élément de support 24 comprend une portion cylindrique 24a emmanchée sur l'alésage 2 de la bague extérieure 1 et une portion radiale 24b.

En fonctionnement, le codeur 10, qui comprend des pôles Nord et des pôles Sud alternés circulairement, crée lors de sa rotation une variation de champ magnétique détectée par le capteur 9 qui transforme cette variation de champ magnétique en un signal électrique envoyé par le câble 12. Le bloc porte-capteur 11 comporte une excroissance radiale 11b formant support de câble 12 et faisant saillie radialement à travers un trou 15c prévu dans la portion cylindrique 15a du capot 15.

Le câble 12 sort du bloc porte-capteur 11 à partir de l'excroissance radiale 11b et relie le bloc porte-capteur 11 au système d'exploitation du signal.

L'alésage 2 de la bague extérieure 1, constituant la surface cylindrique de référence sur laquelle vient se centrer le bloc porte-capteur 11, et la surface extérieure cylindrique 5 de la bague intérieure 4 sont des surfaces rectifiées présentant une très bonne précision géométrique, ce qui permet de définir un entrefer 20 entre le capteur 9 et le codeur 10, déterminé et constant, garantissant ainsi une excellente qualité du signal électrique fourni par le capteur 9. La rainure 17 d'accrochage du capot 15 peut quant à elle être obtenue par tournage, de façon économique, avec une tolérance de précision assez large car elle n'a pas d'influence sur la précision de l'entrefer 20. Les lèvres 22a et 23a des joints d'étanchéité 22 et 23 sont en contact avec la surface extérieure cylindrique 5 de la bague intérieure 4 ce qui garantit une bonne étanchéité du palier à roulement et empêche ainsi l'intrusion de pollutions extérieures à proximité du capteur 9 et du codeur 10 d'une part et des éléments roulants 7 d'autre part.

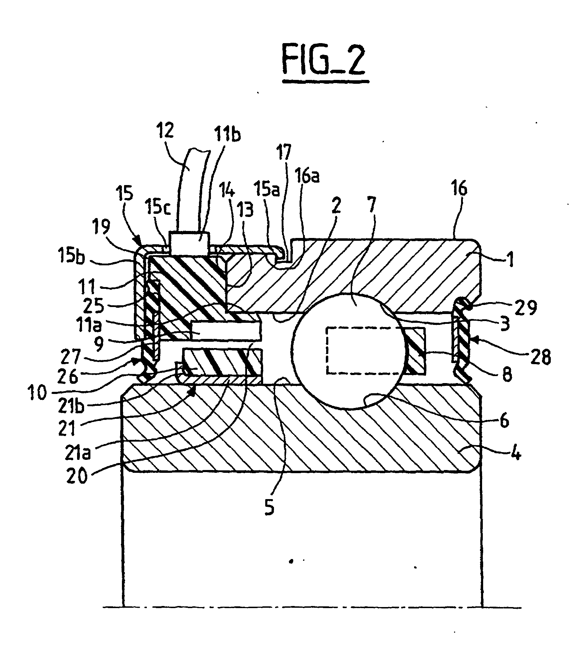

Sur la figure 2, les références des éléments semblables à ceux de la figure 1 ont été conservées. Le bloc porte-capteur 11 comprend à l'opposé de sa surface radiale 14, un logement 25 en forme de lamage dans lequel est disposé un joint d'étanchéité 26 retenu axialement par la portion radiale 15b du capot 15. Le joint d'étanchéité 26 comprend un anneau métallique 27 destiné à accroître sa rigidité. La portion radiale 15b du capot 15 exerce sur le joint d'étanchéité 26 une force dirigée axialement. Le joint d'étanchéité 26 est ainsi pincé entre la portion radiale 15b du capot 15 et le bloc porte capteur 11. Le joint d'étanchéité 26 transmet la force axiale de la portion radiale 15b du capot 15 au bloc porte-capteur 11 qui est ainsi mis en appui axial contre la surface frontale 13 de la bague extérieure 1 comme dans le mode de réalisation de la figure 1.

De l'autre côté des éléments roulants 7, le palier à roulement comprend un second joint d'étanchéité 28 qui est identique au joint d'étanchéité 26 et vient se fixer dans une rainure 29 prévue sur l'alésage 2 de la bague extérieure 1. Cette standardisation des joints d'étanchéité des deux côtés du palier à roulement permet une réduction des coûts de fabrication. On remarque que les portions de grand diamètre des joints d'étanchéité 26 et 28 présentent des aspects légèrement différents. Cela est dû au fait que le joint d'étanchéité 26 est pincé entre le capot 15 et le bloc porte-capteur 11 alors que le joint d'étanchéité 28 vient se loger en se déformant dans la rainure 29 qui est de forme arrondie.

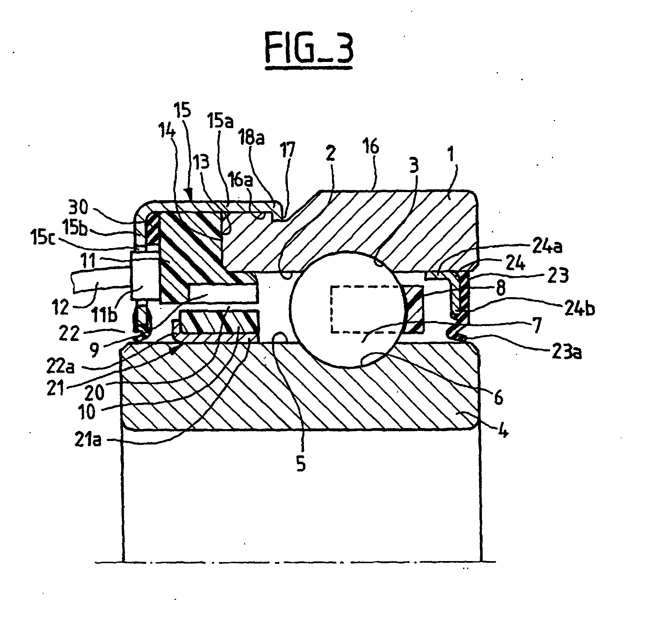

Sur la figure 3, les références des éléments semblables à ceux des figures précédentes ont été observées.

Le bloc porte-capteur 11 est mis en appui contre la surface frontale 14 de la bague extérieure 1 par la portion radiale 15b du capot 15 par l'intermédiaire d'un élément élastique annulaire de calage 30 disposé à proximité de la portion cylindrique 15a du capot 15. L'élément élastique de calage 30 qui est axialement élastique permet de maintenir l'appui du bloc porte-capteur 11 contre la surface 14 de la bague extérieure 1 tout en s'affranchissant de la précision de fabrication du capot 15 et de la rainure 17 dans le sens axial.

L'élément élastique de calage 30 peut être une rondelle en matériau élastomère ou en métal du type Belleville ou Borelly. On parvient ainsi à rattraper des tolérances de fabrication relativement importantes tout en maintenant une précontrainte élastique axiale venant mettre en appui le bloc porte capteur contre la bague du roulement.

La surface frontale 14 de la bague extérieure 1 est rectifiée avec précision. Le trou 15c pour la sortie du support de câble 11b et du câble 12 est prévu dans la portion radiale 15b du capot 15.

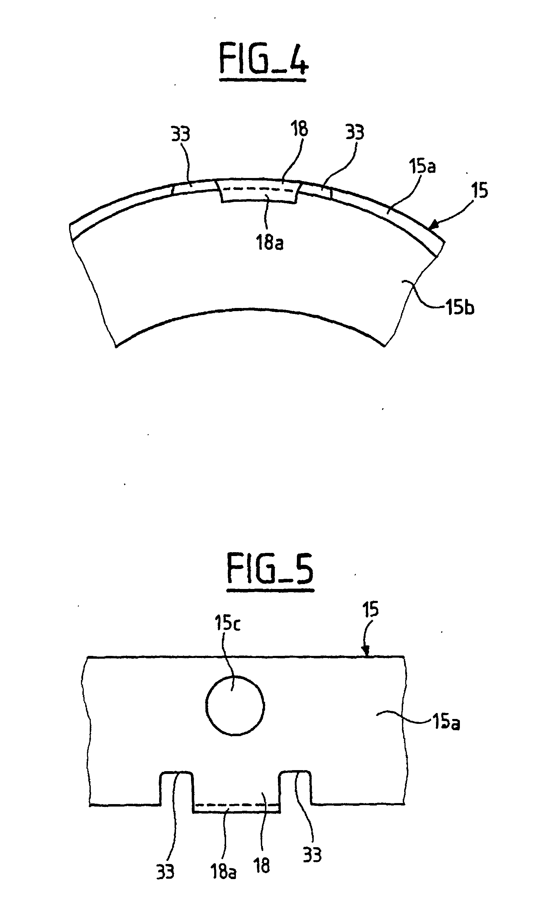

Comme on peut le voir sur les figures 4 et 5, le capot de protection 15 est pourvu sur sa portion cylindrique 15a de languettes 18 dont l'extrémité 18a est recourbée radialement vers l'intérieur de façon à former des griffes d'accrochage capables de coopérer avec la rainure 17 (figure 1). Pour accroître l'élasticité de la languette 18, on prévoit de découper sur ses bords, dans la portion cylindrique 15a des échancrures 33. On facilite ainsi le montage du capot 15 sur la bague fixe 1 du palier à roulement.

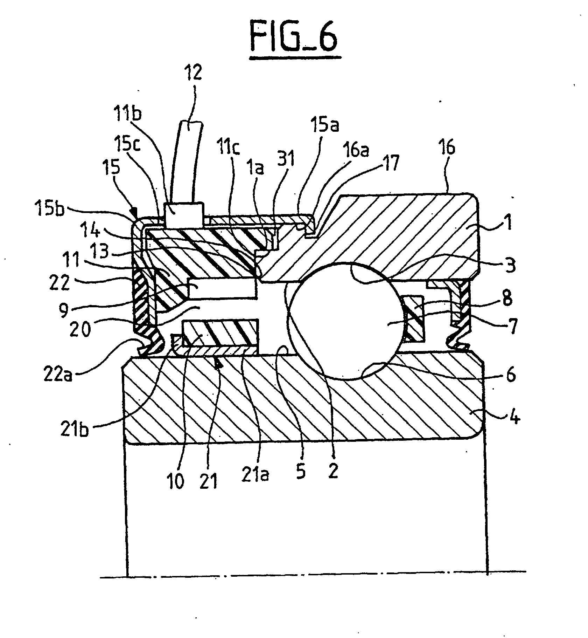

Le mode de réalisation illustré sur la figure 6 est semblable à celui de la figure 1, à ceci près que la bague extérieure 1 comprend une surface cylindrique extérieure la disposée radialement entre l'alésage 2 et la portion 16a de la surface extérieure 16 et axialement adjacente à la surface frontale d'extrémité 14. Le bloc porte-capteur 11 comprend un alésage 11c prévu pour venir se positionner sur la surface cylindrique 1a. Le bloc porte-capteur 11 est en appui axial sur la surface frontale 14. Un espace 31 subsiste entre la bague extérieure 1 et le bloc porte-capteur 11 radialement entre l'alésage 11c et la portion 16a pour ne pas interférer avec l'appui axial sur la surface frontale 14.

Ce mode de réalisation peut être utilisé par exemple dans des roulements de petites dimensions lorsque l'espace radial ou axial entre les bagues est insuffisant pour réaliser un centrage du bloc porte-capteur dans un alésage de la bague extérieure.

Grâce à l'invention, on améliore la qualité du signal délivré par le capteur au moyen de traitement de l'information grâce à un positionnement précis du capteur et du codeur en contact avec des surfaces rectifiées.

Comme on l'a vu plus haut, la précision de réalisation des moyens de retenue et d'accrochage du capteur n'a pas d'influence sur la précision finale de l'entrefer entre capteur et codeur dans la mesure où lesdits moyens sont indépendants des moyens de positionnement du capteur.

Les moyens de retenue et d'accrochage peuvent donc être fabriqués de façon très économique puisqu'ils ne nécessitent aucune précision particulière.

## Revendications

1. Palier à roulement comprenant une bague fixe (1), une bague tournante (4), une rangée d'éléments roulants (7) disposés entre la bague fixe (1) et la bague tournante (4), un moyen codeur (10) solidaire de la bague tournante (4) et concentrique à celle-ci, un moyen capteur (9) pourvu d'un bloc porte-capteur (11) solidaire de la bague fixe (1) et disposé en regard et avec un faible entrefer par rapport au moyen codeur (10) dont le défilement lors de la rotation est détecté par le moyen capteur (9) et un moyen de mise en appui du bloc porte-capteur (11) contre une surface radiale de la bague fixe (1) **caractérisé par le fait que** le moyen capteur (9) est positionné radialement sur la bague fixe (1) par centrage sur une surface de référence cylindrique axiale de ladite bague, l'entrefer étant radial et le dispositif comprenant un capot (15), entourant ledit bloc porte-capteur (11) et solidarisé avec la bague fixe (1) en vue de la retenue axiale dudit bloc porte-capteur (11).

2. Palier selon la revendication 1, **caractérisé par le fait que** la surface de référence cylindrique est un alésage de la bague fixe (1).

3. Palier selon la revendication 1, **caractérisé par le fait que** la surface de référence cylindrique est une surface cylindrique extérieure de la bague fixe (1).

4. Palier selon la revendication 2 ou 3, **caractérisé par le fait que** la surface de référence cylindrique est rectifiée.

5. Palier selon l'une quelconque des revendications précédentes, **caractérisé par le fait qu'**il comprend un moyen de positionnement axial du bloc porte-capteur sous la forme d'une surface (14) radiale de la bague fixe (1).

6. Palier selon la revendication 5, **caractérisé par le fait que** le bloc porte-capteur (11) est mis axialement en appui contre la bague fixe (1) par le capot (15) de retenue, ledit capot (15) comprenant une portion cylindrique (15a) venant coopérer avec la bague fixe (1) et une portion radiale (15b) de retenue et d'appui du bloc porte-capteur (11).

7. Palier selon la revendication 6, **caractérisé par le fait que** le capot (15) coopère avec une rainure annulaire (17) de la bague fixe (1).

8. Palier selon la revendication 7, **caractérisé par le fait que** l'extrémité libre de la portion cylindrique du capot (15) est sertie dans la rainure (17) de la bague fixe (1).

9. Palier selon la revendication 7, **caractérisé par le fait que** l'extrémité libre de la portion cylindrique du capot (15) est pourvue de languettes (18) élastiques formant crochets et coopérant avec la rainure (17) de la bague fixe (1).

10. Palier selon l'une quelconque des revendications précédentes, **caractérisé par le fait que** le moyen codeur (10) est positionné sur une surface cylindrique (5) de la bague tournante (4).

11. Palier selon l'une quelconque des revendications précédentes, **caractérisé par le fait que** le bloc porte-capteur (11) est axialement élastique.

12. Palier selon l'une quelconque des revendications précédentes, **caractérisé par le fait qu'**un joint d'étanchéité (22) est surmoulé sur le capot (15) et vient en contact de frottement sur une portée de la bague tournante (4).

13. Palier selon l'une quelconque des revendications précédentes, **caractérisé par le fait qu'**un joint d'étanchéité (26) est pincé entre le capot (15) et le bloc porte-capteur (11) et vient en contact de frottement sur une portée de la bague tournante (4).

14. Palier selon l'une quelconque des revendications précédentes, **caractérisé par le fait qu'**il comprend deux joints d'étanchéité identiques, disposés de chaque côté des éléments roulants (7).

## Patentansprüche

1. Wälzlager, das einen stillstehenden Ring (1), einen umlaufenden Ring (4), eine Reihe von Wälzkörpern (7) zwischen dem stillstehenden Ring (1) und dem umlaufenden Ring (4), ein an dem umlaufenden Ring (4) befestigtes und zu diesem konzentrisches Impulsgebermittel (10), ein Signalaufnehmermittel (9), das mit einem an dem stillstehenden Ring (1) befestigten Signalaufnehmerträger (11) versehen sowie das auf den Impulsgeber (10) ausgerichtet und durch einen schmalen Luftspalt von diesem getrennt ist, wobei dessen Vorbeilauf bei der Drehbewegung von dem Signalaufnehmermittel (9) erfasst wird, und eine Einrichtung aufweist, die den Signalaufnehmerträger (11) an einer Radialfläche des stillstehenden Ringes (1) abstützt, **dadurch gekennzeichnet, dass** das Signalaufnehmermittel (9) radial auf dem stillstehenden Ring (1) zentriert ist, indem es auf einer axialen, zylindrischen Referenzfläche des Ringes zentriert ist, wobei der Luftspalt radial verläuft und die Vorrichtung einen Deckel (15) aufweist, der den Signalaufnehmerträger (11) umgibt und der an dem stillstehenden Ring (1) dem Signalaufnehmerträger (11) axial gegenüber befestigt ist.

2. Lager nach Anspruch 1, **dadurch gekennzeichnet, dass** die zylindrische Referenzfläche von einer Bohrung des stillstehenden Rings (1) gebildet ist.

3. Lager nach Anspruch 1, **dadurch gekennzeichnet, dass** die zylindrische Referenzfläche von einer zylindrischen Außenumfangsfläche des stillstehenden Ringes (1) gebildet ist.

4. Lager nach Anspruch 2 oder 3, **dadurch gekennzeichnet, dass** die zylindrische Referenzfläche geschliffen ist.

5. Lager nach einem der vorhergehenden Ansprüche, **dadurch gekennzeichnet, dass** es Mittel zur axialen Positionierung des Signalaufnehmerträgers (11) in Gestalt einer Radialfläche (14) des stillstehenden Ringes (1) aufweist.

6. Lager nach Anspruch 5, **dadurch gekennzeichnet, dass** der Signalaufnehmerträger (11) durch den Haltedeckel (15) an dem stillstehenden Ring (1) axial in Anlage gehalten ist, wobei der Deckel (15) einen zylindrischen Abschnitt (15a), der mit dem stillstehenden Ring (1) zusammenwirkt, und einen radialen Abschnitt (15b) zur Halterung des und Anlage an dem Signalaufnehmerträgers (11) aufweist.

7. Lager nach Anspruch 6, **dadurch gekennzeichnet, dass** der Deckel (15) mit einer umlaufenden Nut (17) im stillstehenden Ring (1) zusammenwirkt.

8. Lager nach Anspruch 7, **dadurch gekennzeichnet, dass** das freie Ende des zylindrischen Abschnittes des Deckels (15) in die Nut (17) des stillstehenden Ringes (1) umgebördelt ist.

9. Lager nach Anspruch 7, **dadurch gekennzeichnet, dass** das freie Ende des zylindrischen Abschnitts des Deckels (15) mit elastischen Zungen (18) versehen ist, die Krallen bilden und mit der Nut (17) des stillstehenden Ringes (1) zusammenwirken.

10. Lager nach einem der vorhergehenden Ansprüche, **dadurch gekennzeichnet, dass** der Impulsgeber (10) auf einer zylindrischen Fläche (5) des umlaufenden Ringes (4) angeordnet ist.

11. Lager nach einem der vorhergehenden Ansprüche, **dadurch gekennzeichnet, dass** der Signalaufnehmerträger (11) axial elastisch ist.

12. Lager nach einem der vorhergehenden Ansprüche, **dadurch gekennzeichnet, dass** eine Dichtungseinrichtung (22) auf den Deckel (15) aufgespritzt ist und gleitend mit einer Anlagefläche des umlaufenden Ringes (4) in Berührung steht.

13. Lager nach einem der vorhergehenden Ansprüche, **dadurch gekennzeichnet, dass** eine Dichtungseinrichtung (26) zwischen dem Deckel (15) und dem Signalaufnehmerträger (11) eingespannt ist und eine Anlagefläche des umlaufenden Ringes (4) gleitend berührt.

14. Lager nach einem der vorhergehenden Ansprüche, **dadurch gekennzeichnet, dass** es zwei identische Dichtungseinrichtungen aufweist, die auf beiden Seiten der Wälzkörper angeordnet sind.

## Claims

1. Rolling bearing comprising a stationary race (1), a rotating race (4), a row of rolling bodies (7) arranged between the stationary race (1) and the rotating race (4), an encoder means (10) secured to the rotating race (4) and concentric therewith, a sensor means (9) provided with a sensor carrier block (11) secured to the stationary race (1) and arranged facing and a small gap away from the encoder means (10), the travel of which, during rotation, is detected by the sensor means (9) and a means for making the sensor carrier block (11) bear against a radial surface of the stationary race (1), **characterized in that** the sensor means (9) is positioned radially on the stationary race (1) by being centred on an axial cylindrical reference surface of the said race, the gap being radial and the device comprising a cap (15) surrounding the said sensor carrier block (11) and secured to the stationary race (1) in order to provide axial retention of the said sensor carrier block (11).

2. Bearing according to Claim 1, **characterized in that** the cylindrical reference surface is a bore of the stationary race (1).

3. Bearing according to Claim 1, **characterized in that** the cylindrical reference surface is an external cylindrical surface of the stationary race (1).

4. Bearing according to Claim 2 or 3, **characterized in that** the cylindrical reference surface is ground.

5. Bearing according to any one of the preceding claims, **characterized in that** it comprises a means for the axial positioning of the sensor carrier block, in the form of a radial surface (14) of the stationary race (1).

6. Bearing according to Claim 5, **characterized in that** the sensor carrier block (11) is made to bear axially against the stationary race (1) by the retaining cap (15), the said cap (15) comprising a cylindrical portion (15a) which interacts with the stationary race (1) and a radial portion (15b) for retaining and pressing on the sensor carrier block (11).

7. Bearing according to Claim 6, **characterized in that** the cap (15) interacts with an annular groove (17) in the stationary race (1).

8. Bearing according to Claim 7, **characterized in that** the free end of the cylindrical portion of the cap (15) is crimped into the groove (17) of the stationary race (1).

9. Bearing according to Claim 7, **characterized in that** the free end of the cylindrical portion of the cap (15) has elastic tabs (18) forming hooks and interacting with the groove (17) in the stationary race (1).

10. Bearing according to any one of the preceding claims, **characterized in that** the encoder means (10) is positioned on a cylindrical surface (5) of the rotating race (4).

11. Bearing according to any one of the preceding claims, **characterized in that** the sensor carrier block (11) is axially elastic.

12. Bearing according to any one of the preceding claims, **characterized in that** a seal (22) is overmoulded onto the cap (15) and comes into rubbing contact with an area of the rotating race (4).

13. Bearing according to any one of the preceding claims, **characterized in that** a seal (26) is trapped between the cap (15) and the sensor carrier block (11) and comes into rubbing contact with an area of the rotating race (4).

14. Bearing according to any one of the preceding claims, **characterized in that** it comprises two identical seals, one arranged on each side of the rolling bodies (7).
